# EUROPÄISCHE PATENTANMELDUNG

(11) **EP 1 791 247 A2**
(43) Veröffentlichungstag der Anmeldung: **30.05.2007**
(21) Anmeldenummer: 06123214.6
(22) Anmeldetag: 31.10.2006
(51) Int. Cl.: H02M 7/06, H02M 1/14

(54) **Netzteil für eine Gleichspannungsversorgung mit geringer Restwelligkeit und deutlich verringerter Einschaltverzögerung**

(30) Priorität: 29.11.2005 DE 102005057199
(71) Anmelder: ROBERT BOSCH GMBH, 70442 Stuttgart (DE)
(72) Erfinder: Single, Ulrich, 73732, Esslingen (DE)

(57) **Zusammenfassung**

Es wird ein Netzteil für die Gleichspannungsversorgung eines aus einem Wechselspannungsnetz gespeisten Elektrogerätes vorgeschlagen, insbesondere ein Netzteil für ein durch einen Universalmotor antreibbares Elektrowerkzeug wie beispielsweise eine Schlagbohrmaschine. Die hierzu benötigte Konstantspannungsquelle enthält die Reihenschaltung eines Konstantspannungselementes (40), eines Gleichrichterelementes (48) und eines Vorwiderstandes (44,46), welcher zumindest teilweise (44) gemeinsam mit dem Konstantspannungselement (40) durch eine Pufferkapazität (52) überbrückt ist. Hierdurch liegt die Pufferkapazität auf einem deutlich höheren Spannungsniveau als die benötigte Gleichspannung (U), wodurch diese einerseits deutlich schneller bereitgestellt wird und andererseits nur eine sehr geringe Pulsation aufweist. Eine so erzeugte Gleichspannung (U) eignet sich sehr gut sowohl zur Speisung einer Steuereinheit des Elektrogerätes wie auch zur Speisung von zusätzlichen Verbrauchern, wobei die geringe Pulsation der Gleichspannung beispielsweise bei der Speisung von Leuchtdioden als zusätzlichen Verbrauchern die Schwankung der Leuchtstärke zumindest soweit reduziert, dass sie für das menschliche Auge nicht mehr erkennbar ist (Figur 1).

## Beschreibung

### Stand der Technik

Die Erfindung geht aus von einem Netzteil für die Gleichspannungsversorgung eines aus einem Wechselspannungsnetz gespeisten Elektrogerätes, insbesondere eines durch einen Universalmotor antreibbaren Elektrowerkzeuges, mit einer Konstantspannungsquelle zur Bereitstellung einer Gleichspannung direkt aus dem Wechselspannungsnetz. Derartige Netzteile sind grundsätzlich bekannt, wobei die Gleichspannung, beispielsweise zur Versorgung einer Steuereinheit des Elektrogerätes, zur Kostenreduzierung direkt aus dem Wechselspannungsnetz ohne galvanische Trennung gewonnen wird. Die von bekannten Netzteilen erzeugte Gleichspannung weist jedoch in der Regel eine hohe Restwelligkeit auf, welche die Einsatzmöglichkeiten derartiger Netzgeräte erheblich einschränkt.

Der Erfindung liegt die Aufgabe zugrunde, mit geringem Schaltungs- und Kostenaufwand ein Netzteil für die Gleichspannungsversorgung von Teilen eines aus einem Wechselspannungsnetz gespeisten Elektrogerätes zu schaffen, dessen Ausgangsgleichspannung nur eine geringe Restwelligkeit aufweist, wobei gleichzeitig die Bereitstellung der Gleichspannung beschleunigt werden soll um die Einschaltverzögerung des angeschlossenen Gerätes deutlich zu reduzieren. Diese Aufgabe wird gelöst durch die kennzeichnenden Merkmale des Anspruches 1, wobei insbesondere durch die reduzierte Welligkeit der erzeugten Gleichspannung neue Anwendungsmöglichkeiten eröffnet werden, beispielsweise für hochauflösende A/D-Wandler, Sensoren oder Infrarot- und Funkempfänger mit Schaltungsanordnungen, welche nur eine geringe Welligkeit der Versorgungsspannung zulassen.

Eine besonders vorteilhafte Lösung, insbesondere für Netzgeräte mit niedrigen Ausgangsströmen bis cirka 20 mA, ergibt sich, wenn die Konstantspannungsquelle mit einer Zenerdiode als Konstanzspannungselement aufgebaut ist. Zenerdioden mit einer Durchbruchsspannung von etwa 5 V, zum Beispiel für die Gleichspannungsversorgung eines Mikrocontrollers als Steuereinheit eines Elektrogerätes, sind preiswert erhältlich. Anstelle einer Zenerdiode kann auch ein Transistor, ein Festspannungsregler oder ein ähnliches Bauteil zur Spannungsstabilisierung verwendet werden. Zur Glättung der Versorgungs- Gleichspannung eignet sich dabei insbesondere ein Elektrolytkondensator, welcher dem Konstantspannungselement parallel geschaltet.

Der Vorwiderstand der Konstantspannungsquelle wird vorteilhafterweise als ohmscher Spannungsteiler ausgebildet, wobei das Konstantspannungselement gemeinsam mit einem geeignet bemessenen Teilwiderstand des Spannungsteilers durch eine Pufferkapazität überbrückt wird. Bei der Dimensionierung der Teilwiderstände unter Berücksichtigung der Glättungsanforderungen für die Gleichspannung muss dabei ein Kompromiss gefunden werden, da die Baugröße und die Kosten für den Pufferkondensator zunehmen, je höher die zu puffernde Spannung gewählt wird. Andererseits wird mit zunehmender Pufferspannung die Restwelligkeit der Gleichspannung niedriger.

Ein weiterer Vorteil des erfindungsgemäßen Netzgerätes besteht darin, dass in Reihe mit dem Konstanzspannungselement und dem Vorwiderstand nun zusätzliche Verbraucher angeordnet werden können, die mit einer Gleichspannung mit geringer Restwelligkeit gespeist werden, ohne dass die Kapazität des Pufferkondensators erhöht werden muss. Diese zusätzliche Schaltungsmöglichkeit ist beispielsweise gut geeignet für die Speisung von Leuchtdioden direkt aus dem Wechselspannungsnetz, welche so ohne das sonst durch die Halbwellengleichrichtung der Netzspannung bedingte Flackern der Leuchtstärke betrieben werden können.

Weitere Einzelheiten und vorteilhafte Ausgestaltungen der Erfindung ergeben sich aus den Unteransprüchen und der Beschreibung eines Ausführungsbeispiels.

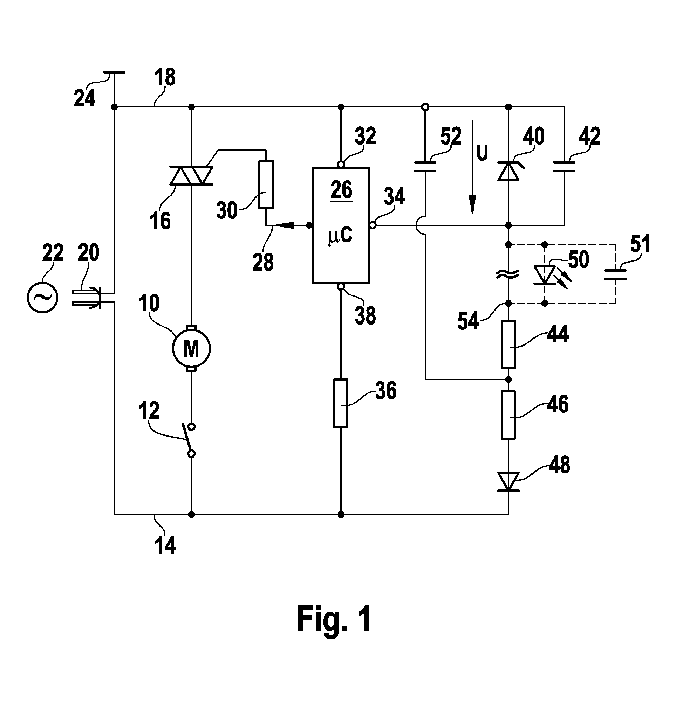

Die Zeichnung zeigt eine Schaltungsanordnung für den Anschluss eines durch einen Universalmotor angetriebenen Elektrowerkzeuges an einem Wechselspannungsnetz.

In der Figur ist mit 10 ein Universalmotor bezeichnet, wie er häufig als Antrieb für aus einem Wechselspannungsnetz gespeiste Elektrogeräte, beispielsweise Elektrowerkzeuge, Anwendung findet. Der Universalmotor 10 ist über einen manuellen Schalter 12 mit einer Wechselspannungsleitung 14 und über einen Triac 16 mit einer Wechselspannungsleitung 18 verbunden. Die beiden Leitungen 14 und 18 sind über einen Stecker 20 an eine Wechselspannungsquelle 22 angeschlossen. Die Wechselspannungsleitung 18 bildet zusätzlich die Masse 24 der Gleichspannungsversorgung und das Bezugspotential des Systems.

Die Ansteuerung des Triac 16 erfolgt durch eine Steuereinheit über eine Leitung 28 und einen Widerstand 30. Als Steuereinheit dient ein Mikrocontroller 26, welcher mit seinen Eingängen 32 und 34 an eine Versorgungs-Gleichspannung von -5,1 V angeschlossen ist, die von einer weiter unten näher erläuterten Konstantspannungsquelle bereitgestellt wird. Als Steuereinheit kann jedoch auch eine analoge Schaltung zur Realisierung der Motorsteuerung verwendet werden. Die Netzsynchronisation des Mikrocontrollers 26 erfolgt über einen weiteren Widerstand 36 zwischen der Wechselspannungs-Leitung 14 und dem Anschluss 38 am Mikrocontroller 26.

Die Konstantspannungsquelle zur Bereitstellung der Versorgungs-Gleichspannung U enthält ein Konstantspannungselement in Form einer Zenerdiode 40 und eines parallel geschalteten Glättungskondensators 42, welche gemeinsam in Reihe zu einem Spannungsteiler aus zwei Widerständen 44 und 46 sowie einer Einweg-Gleichrichterdiode 48 zwischen die Anschlussleitungen 14 und 18 der Wechselspannungsversorgung geschaltet sind. Ferner kann, wie in der Figur gestrichelt dargestellt, in den Leitungszug der Konstantspannungsquelle ein weiterer Verbraucher eingefügt werden, beispielsweise in Form einer oder mehrerer, in Reihe oder parallel geschalteter Leuchtdioden 50 mit parallelem Glättungskondensator 51. Die Reihenschaltung aus der Zenerdiode 40, gegebenenfalls der Leuchtdiode 50 und dem Teilwiderstand 44 des Spannungsteilers 44, 46 ist durch einen Pufferkondensator 52 überbrückt. Anstelle von Leuchtdioden können auch ein oder mehrere andere Verbraucher wie Sensoren, Sendeeinheiten oder andere Analog- oder Digitalschaltungen eingefügt werden.

Die Schaltungsanordnung arbeitet folgendermaßen:

Mit dem Anschluss des Steckers 20 an die Wechselspannungsquelle 22 liegt an den Leitungen 14 und 18 die Netzwechselspannung, beispielsweise eine Wechselspannung mit einem Effektivwert von 230 V, beziehungsweise einem Scheitelwert der Sinusspannung von 324 V. Diese Wechselspannung teilt sich auf die Widerstände 44 und 46 sowie auf die Spannungsabfälle an der Zenerdiode 40, der Leuchtdiode 50 und der Gleichrichterdiode 48 auf. Im Ausführungsbeispiel beträgt die Durchbruchsspannung der Zenerdiode 5,1 V, die restliche Wechselspannung teilt sich in der von der Gleichrichterdiode 48 durchgelassenen negativen Halbwelle im Wesentlichen auf die beiden Widerstände 44 und 46 auf entsprechend ihren Widerstandswerten. Dabei ist die Pufferwirkung des Kondensators 52 umso wirkungsvoller, je größer der Widerstandswert des Widerstandes 44, beziehungsweise je kleiner der Widerstandswert des Widerstandes 46 ist. Der Wert des Widerstandes 46 kann auch Null Ohm werden. Ein sehr kleiner Widerstandswert des Widerstandes 46 bedingt jedoch ein entsprechend großes Bauvolumen und entsprechend höhere Kosten für einen spannungsfesten Pufferkondensator 52.

Die Anordnung des Pufferkondensators 52 bewirkt nun, dass die Spannung an der Anode der Zenerdiode 40 in der durch die Gleichrichterdiode 48 gesperrten Halbwelle nicht mehr unter den Wert der Durchbruchsspannung absinkt, im Ausführungsbeispiel also nicht mehr unter eine Spannung von -5,1V, welche dem angeschlossenen Verbraucher, im Ausführungsbeispiel also den Mikrocontroller 26, als Versorgungsspannung dauernd zur Verfügung steht. Entsprechend bleibt auch die Speisespannung der Leuchtdiode 50 dauernd auf dem benötigten Niveau, im Ausführungsbeispiel also bei etwa -8 V entsprechend der Summe aus dem Spannungsabfall an der Zenerdiode 40 und der Leuchtdiode 50.

Das erfindungsgemäße Netzteil erlaubt den Aufbau einer kostengünstigen Schaltungsanordnung, welche die Spannungsversorgung einer Steuerungselektronik für ein Elektrogerät und gegebenenfalls zusätzlicher Verbraucher mit einer Gleichspannung mit sehr geringer Restwelligkeit ermöglicht. So können zum Beispiel zu Anzeigezwecken in dem Elektrogerät verwendete Leuchtdioden in Reihe zum Netzteil angeordnet werden ohne störende Schwankungen ihrer Leuchtstärke. Außerdem können durch die deutlich reduzierte Pulsation der Versorgungsspannung insbesondere für die Steuerelektronik des Gerätes neue, vereinfachte Schaltungsvarianten verwendet werden. Zum Beispiel wird der Betrieb von hochauflösenden Analog/Digital-Wandlern zur Spannungsmessung möglich sowie die Verwendung von gegen Pulsationen empfindlichen Halbleiterbauelementen.

Ein weiterer wesentlicher Vorteil des erfindungsgemäßen Netzteils besteht darin, dass die Einschaltverzögerung der Steuereinheit 26 deutlich verringert wird, da der parallel zum Konstantspannungselement 40 und dem benötigten Vorwiderstand 44 angeordnete Pufferkondensator 52 sehr viel schneller die erforderliche Durchbruchsspannung der Zenerdiode 40, beziehungsweise die an der Reihenschaltung aus einer Zenerdiode 40 und einer Leuchtdiode 50 benötigte Summenspannung erreicht. Die Verringerung der Einschaltverzögerung entsteht daraus, dass für den Kondensator 42 eine wesentlich geringere Kapazität gewählt werden kann, da über die gesamte Vollwelle durch den Kondensator 52 eine Spannung zur Verfügung steht. Werden Leuchtdioden zur Datenübertragung verwendet, so können diese in beiden Netzhalbwellen statt in einer Halbwelle Daten übertragen.

Der Grundgedanke des erfindungsgemäßen Netzteils sieht also eine verbesserte Spannungsstabilisierung und eine beschleunigte Bereitstellung der Versorgungsgleichspannung U dadurch vor, dass ein Kondensator zur Pufferung der Gleichspannung auf ein höheres Spannungsniveau gelegt wird, indem mindestens ein Teilwiderstand 44 des gesamten Vorwiderstandes in Form des Spannungsteilers 44, 46 gemeinsam mit dem Konstantspannungselement 40 durch den Pufferkondensator 52 überbrückt wird. Bei einer Halbierung des Gesamtwiderstandes der Widerstände 44 und 46 liegt der Kondensator 52 dann etwa auf der halben Versorgungsspannung durch die Wechselspannungsquelle 22. Dieser Einfluss wird umso größer, je näher die Spannung des Pufferkondensators 52 an das Spannungsniveau der Wechselspannungsquelle 22 angeglichen wird, wobei jedoch wegen des großen Bauraums und der höheren Kosten von spannungsfesten Kondensatoren in der Praxis das Aufteilungsverhältnis begrenz wird.

Bei einer Ausführungsform mit einer Zenerdiode 40 mit einer Durchbruchsspannung von 5,1 V, einer Halbierung des gesamten Vorwiderstandes von 15 kOhm auf zweimal 7,5 kOhm für die Widerstände 44 und 46 sowie bei Kapazitätswerten für den Kondensator 42 von 47 µF und für den Kondensator 52 von 4,7 µF ergibt sich eine Reduzierung der Restwelligkeit der Gleichspannung U von cirka 300 mV auf 30 mV. Gleichzeitig verkürzt sich die Zeit bis zum Erreichen des vorgegebenen Gleichspannungswertes U von -5,1 V von cirka 300 ms auf cirka 65 ms . Der Lastwiderstand für das Netzteil durch den Mikrocontroller 26 beträgt dabei 1 kohm.

Sollen durch die Schaltungsanordnung zusätzliche Verbraucher, zum Beispiel Sensoren oder Leuchtdioden, gespeist werden, so werden diese üblicherweise im Längszweig der Versorgungsspannung angeordnet. Dies ist in der Schaltung in Form der Leuchtdiode 50 zwischen der Zenerdiode 40 und dem Widerstand 44 dargestellt. Ohne den Pufferkondensator 52 würde dabei die Spannung an der Leuchtdiode 50 in einer Halbwelle nahezu verschwinden und das ausgestrahlte Licht mit der Netzfrequenz flackern. Durch die Anordnung des Pufferkondensators 52 auf einem Spannungsniveau deutlich über der Versorgungs-Gleichspannung U tritt dieses Flackern nicht mehr auf, da in beiden Netzhalbwellen an der Kathode der Leuchtdiode 50 nun eine ausreichende Speisespannung von circa -8 V anliegt. Die an dem Kondensator 52 anliegende Spannung schwankt auf einem deutlich höheren Niveau, wobei sich die Spannung an der Leuchtdiode 50 nicht wesentlich ändert. Die Änderung wird durch den parallel geschalteten Kondensator 51 noch weiter reduziert. Dies ist jedoch nur bei Schaltungen erforderlich, die eine sehr geringe Restwelligkeit benötigen. Entsprechend diesem Schaltungsprinzip für die Leuchtdiode 50 können auch mehrere und andere Verbraucher in den Längszweig der Gleichrichterschaltung angeordnet werden.

## Patentansprüche

1. Netzteil für die Gleichspannungsversorgung eines aus einem Wechselspannungsnetz gespeisten Elektrogerätes, insbesondere eines durch einen Universalmotor antreibbaren Elektrowerkzeuges, mit einer Konstantspannungsquelle zur Bereitstellung einer Gleichspannung direkt aus dem Wechselspannungsnetz, wobei in einer Reihenschaltung eines Konstantspannungselementes (40),eines Gleichrichterelementes (48)und eines Vorwiderstandes (44,46) zumindest ein Teil (44) des Vorwiderstandes (44,46) gemeinsam mit dem Konstantspannungselement (40) durch eine Puffer-Kapazität (52) überbrückt ist.

2. Netzteil nach Anspruch 1, **dadurch gekennzeichnet, dass** die Konstantspannungsquelle mit einer Zenerdiode (42) als Konstantspannungselement aufgebaut ist.

3. Netzteil nach Anspruch 1 oder 2, **dadurch gekennzeichnet, dass** dem Konstantspannungselement (40) ein Elektrolytkondensator (42) parallel geschaltet ist.

4. Netzteil nach einem der vorhergehenden Ansprüche, **dadurch gekennzeichnet, dass** der Vorwiderstand als ohmscher Spannungsteiler (44,46) ausgebildet und das Konstantspannungselement (40) gemeinsam mit einen Teilwiderstand (44) des Spannungsteilers (44,46) durch die Pufferkapazität (52) überbrückt ist.

5. Netzteil nach einem der vorhergehenden Ansprüche, **dadurch gekennzeichnet, dass** in Reihe mit dem Konstantspannungselement (40) und dem Vorwiderstand (44,46) wenigstens ein zusätzlicher Verbraucher (50) geschaltet ist.

6. Netzteil nach Anspruch 5, **dadurch gekennzeichnet, dass** der zusätzliche Verbraucher aus wenigstens einer Leuchtdiode (50) besteht.

7. Netzteil nach einem der vorhergehenden Ansprüche, **dadurch gekennzeichnet, dass** die Versorgungs-Gleichspannung (U) für eine elektronische Steuereinheit (26) des Elektrogerätes (10) an dem Konstantspannungselement (40,42) abgenommen wird.

8. Netzteil nach einem der vorhergehenden Ansprüche, **dadurch gekennzeichnet, dass** es parallel zu der Reihenschaltung des Elektrogerätes (10), eines Triac (16) und vorzugsweise eines weiteren Schaltelementes (12) an das Wechselspannungsnetz (14,18;20,22) anschließbar ist.
